# EUROPEAN PATENT APPLICATION

(11) **EP 4 653 077 A1**
(43) Date of publication of application: **26.11.2025**
(21) Application number: 24177979.2
(22) Date of filing: 24.05.2024
(51) Int. Cl.: B01D 67/00, B01D 69/02, B01D 71/70, C25F 3/12

(54) **A METHOD FOR MANUFACTURING A MEMBRANE WITH THROUGHGOING HOLES**

(71) Applicant: Stichting IMEC Nederland, 5656 AE Eindhoven (NL); Imec VZW, 3001 Leuven (BE)
(72) Inventor: WIERINGA, Fokko, 6661 RE Elst (NL); SURAN, Swathi, 5504 EV Veldhoven (NL); CUMMINS, Cian, 3210 Lubbeek (BE); LANGEREIS, Geert, 5611 HX Eindhoven (NL)
(74) Representative: AWA Sweden AB

(57) **Abstract**

According to an aspect of the present inventive concept there is provided a method for manufacturing a membrane with through-going pores, the method comprising: controlling starting points for the through-going pores by forming indents on a surface of a semiconductor substrate using a dry-etch process or by applying a mask on the surface of the semiconductor substrate comprising openings in the mask; forming the pores, at locations of the starting points, through the semiconductor substrate using electrochemical etching, wherein the electrochemical etching through the semiconductor substrate selectively starts at the starting points.

## Description

### Technical field

The present description relates to a method for manufacturing a membrane with through-going pores.

### Background

A filter is a device that separates particles from a fluid. The filter may comprise a membrane, wherein pores extend through the membrane.

As an example, a filter may be a hollow fiber membrane, wherein the pores of the membrane may be located in the walls of hollow polymer fibers. Such hollow polymer fibers may be produced by polymer extrusion through a spinneret.

As another example, a filter may be produced by etching holes through a solid membrane, wherein the holes form the pores of the membrane.

### Summary

An objective of the present description is to provide a membrane of high quality and manufacturability. It is a further objective of the present description to provide a membrane which withstands strong forces. It is a further objective of the present description to provide a membrane which has a high porosity, aspect ratio and precisely tunable monodisperse nanopore diameter.

These and further objectives of the invention are at least partly met by the invention as defined in the independent claims. Preferred embodiments are set out in the dependent claims.

According to an aspect, there is provided a method for manufacturing a membrane with through-going pores, the method comprising:
controlling starting points for the through-going pores by forming indents on a surface of a semiconductor substrate using a dry-etch process, or by applying a mask on the surface of the semiconductor substrate comprising openings in the mask;
forming the pores, at locations of the starting points, through the semiconductor substrate using electrochemical etching, wherein the electrochemical etching through the semiconductor substrate selectively starts at the starting points.

It is a realization that the formation of starting points for the pore formation allows for a membrane which has a high aspect ratio in combination with precise pore width distribution, high porosity and biocompatibility.

It is a realization that he starting points can be made by the formation of indents in the surface of the semiconductor structure or by applying a mask on the surface of the semiconductor surface.

This is especially advantageous within medical practice. Membranes within medical practice preferably have precisely tuneable pores which have a high porosity, i.e. a low pressure drop, are highly biocompatible for preventing blood clotting or protein deposition over very long time periods and which are able to withstand the full bodily blood pressure in combination with shockwaves that may occur from sudden accelerations or decelerations or contact forces.

In order to enable increased portability, wearability, or even implantability, it is highly advantageous if the volume and weight in relation to effective pore surface of such membranes is reduced. For implantable applications the durability should be very long, and preferably allow for several years or even decades between surgeries.

All this is realized by the method according to the first aspect.

The method may be used to manufacture a membrane which is suitable within artificial organs, like artificial kidneys, artificial lungs and artificial pancreas.

Moreover, the method may be used to manufacture a membrane which is suitable for protection of sensors from fouling or for encapsulating of cell-cultures so that they can be nourished by bodily fluids and diffuse waste products or desired products (e.g. insulin), while being protected against attacks for the bodily immune system (e.g. implanted Langerhans cells to produce said insulin).

Electrochemical etching (ECE) is a technique that can create pores in silicon membranes, with diameters within the nanometer ranges. The ECE technique allows for creation of pores without the use of a mask to decide the placement of the pores. Instead, ECE relies on the crystal structure, doping and surface polish of the silicon membrane to be etched, as well as the volumetric ratio between etching fluid ingredients, such as hydrofluoric acid and ethanol, the electric current amplitude used during the etching and optional additional lightning during the etching. The pores then start to form due to local irregularities in the silicon membrane surface. However, the pore formation show a relatively wide distribution of pore diameters. Thus, improvements are needed.

It is a realization of the present description that the starting points and diameters of the etching of the pores are well defined by the forming of the indents or by the application of the mask comprising openings as starting points of the etching. By this, the spatial distribution and the width of the pores are defined by the starting points. Hence, by accurately controlling the forming of the indents, the formation of pores may be confined to the defined starting points. Alternatively, the accurate openings of the mask may be used to define the starting points. Thus, controlling of the forming of the starting points allows accurate control of spatial distribution and width of the pores.

Moreover, the combination of the starting points and the pore formation using the electrochemical etching gives pores having a very high aspect ratio due to the effect of the electrochemical etching that the etching takes place nearly exclusively at the bottom of the pores. This is caused by the volumetric distribution of the space charge region populated by holes (i.e., electron holes/vacant electron positions).

In other words, it is a realization that, as the starting points, being indents or openings of the mask, formed on the surface of the semiconductor substrate are very regularly patterned, without spontaneously etch-starting pores in between, space charge regions of individual pores are much less likely to influence each other or to become combined. Thus, higher aspect ratios can be obtained, while preserving the monodispersity of pore width and a very large pore density.

Thus, the through-going pores may have a very high aspect ratio.

The semiconductor substrate may be e.g. silicon or any other semiconductor. The semiconductor substrate may comprise further layers above the semiconductor, e.g. an oxide layer above the semiconductor. To exemplify, the substrate may be e.g. a silicon wafer with an oxide layer on top, or just a silicon wafer. A wafer with further layers may be referred to as stack.

During the forming of the indents on a surface of a semiconductor substrate a dry-etch process is used. In dry etching, the kinetic energy of particle beams is used to remove particles from the surface of the semiconductor substrate.

Dry etching is preferred as it is a cleaner and more controllable process than for example wet etching.

The dry etching used may be deep reactive ion etching.

The dry etching may be performed to a depth of 30-110 nm.

During the forming of the pores, at the locations of the starting points and penetrating through the semiconductor substrate, electrochemical etching is used.

During the forming of the pores, progressively deepening pits etch into the substrate. The pits will eventually reach through the entire substrate to form the pores.

The semiconductor substrate is connected to an anode of a DC source and immersed into an electrolyte. The electrolyte may comprise ethanol, dimethylformamide and/or hydrogen fluoride. A current is applied over the electrolyte. Under the electrical current, the electrolyte removes particles from the semiconductor substrate, providing a pore. During the etching electron and holes are formed.

The method may be configured to form pores with a pore size below 20 nm by the etching. When, for instance, filtering blood, the pore size may need to be small, as many components of blood are small. It may be advantageous with a pore size below 20 nm.

The pore size may be a lateral distance across the pore, i.e. a lateral distance across the pore in a direction parallel with the surface of the semiconductor substrate. The pore size may be the smallest lateral distance across the pore. As an example, for a pore in the shape of a round hole, the pore size may be the diameter of the round hole.

According to one embodiment the controlling of starting points comprises:
depositing a coating of a block-copolymer on the surface of the semiconductor substrate
removing one of the block-copolymers, wherein the remaining block-copolymer act as a mask for forming the indents or act as starting points for forming the pores.

It is an advantage to use the block-copolymer, as the effectiveness of ECE may increase. The mask is electrically isolating, therefore extra concentrating the electric current, which stimulates concentration of the etch process onto the pores, instead of at the whole semiconductor substrate, as in traditional in unmasked ECE.

The block-copolymer is deposited on the surface of the semiconductor substrate. Through molecular self-assembly, the block-copolymer forms a very regular pattern across the surface of the semiconductor substrate.

Dry etching may be used to remove one of the block-copolymers. Specifically, the dry-etch may etch one copolymer much faster than the other copolymer(s). This allows for creation of a very regular distributed spatial pattern of starting points at or into the semiconductor substrate having a very high pore density.

The block copolymer layer is a layer that comprises block copolymers (BCPs). A BCP may be a polymer comprising two or more polymer blocks, the two or more polymer blocks being different from each other. The polymer blocks may be homopolymer blocks. The polymer blocks may be linked by covalent bonds. The polymer blocks may form a linear chain. The BCPs may e.g. be diblock copolymers (di-BCPs), where each linear chain comprises two blocks, A and B. However, any type of BCP may be used, e.g. triblock copolymers (tri-BCPs).

Converting the BCP layer to a mask may comprise a self-assembly process. Herein, the BCPs may arrange to form domains, e.g. two or more types of domains. The formation of domains may be caused by the polymers of the different block types repelling each other, e.g. the polymer of block A repelling the polymer of block B. For example, chemically distinct homopolymers may repel each other. Thus, homopolymers of block A may be chemically distinct from homopolymers of the block B. Since the blocks are linked to each other, a microphase separation may occur in the BCP melt. After the microphase separation, the BCP layer may comprise A-type domains, comprising block A polymers, and B-type domains, comprising block B polymers. Various shapes and patterns are possible for the domains. Domains may be in the shape of cylinders (e.g. vertical cylinders in a hexagonally close-packed pattern), lamella (e.g. lamella in a pattern of curved paths), spheres (e.g. spheres in a body-centered cubic packed pattern), or gyroid networks. The self-assembly process may be initiated and/or controlled by e.g. baking the BCP layer. Baking may allow energy free minimum to be reached for the BCP. Baking, once above the BCP glass transition temperature, may introduce energy into the system that induces self-assembly. The baking temperature may control the shape and/or pattern of the domains. Baking may further solidify the BCP.

Converting the BCP layer to a mask further comprises selectively removing domains of the BCP layer. One domain type may e.g. selectively be removed by wet etch. The wet etch may herein be a solvent having a high solubility for one domain type and a low solubility for the other domain type. After etching, the surface of the semiconductor substrate may be exposed in the regions of the selectively removed domains.

Exposed regions of the surface of the semiconductor substrate are subsequently etched to form pores, with or without a first formation of indents. The shape and pattern of the pores may herein be defined by the mask.

To exemplify, the conversion of the BCP layer to a mask may be done as follows. A BCP layer may be baked under conditions which induce cylindrical domains of block B polymers, B-type domains. Thus, these B-type domains are cylinders. Herein, the cylinders may extend perpendicular to the surface of the first layer. Such cylindrical domains may be termed vertical cylindrical domains. The B-type domains may then be selectively removed by a wet etch or dry etch. This may leave a layer comprising the A-type domains with cylindrical holes exposing a top surface of the first layer. Thus, a mask is formed such that the semiconductor surface may be etched in the exposed regions while the rest of the semiconductor surface is masked and therefore not etched. The etching may be a dry etching to form the indents at the openings or an electrochemical etching to form the pores immediately from the position of the mask.

It is a realization that the use of a mask made from a BCP layer facilitates production of very small pores. Thus, an efficient filter may be produced. Such a filter may filter out most particles and only let the smallest particles pass. A mask made from a BCP layer facilitates production of pores with a size below 20 nm.

Further, a mask made from a BCP layer facilitates a uniform size distribution of the pores. For example, the variance of the pore size (e.g. the pore diameter) may be small when the pores are produced using a mask made from a BCP layer. Thus, highly selective filtration is facilitated. Phrased differently, the filter may have a steep size cut-off.

Further, a mask made from a BCP layer facilitates a high pore density. This allows a much smaller device footprint for the same filter function as compared to present filters. Fabricating compact, e.g. compact and ultrathin, membrane layers may facilitate devices moving beyond the current commercial membranes.

Further, a mask made from a BCP layer facilitates patterning of a large area of the surface of the semiconductor substrate. The pattern of the mask may extend over the entire surface of the semiconductor substrate. The substrate area and position may then be set by the use of a second mask, e.g. a hard mask under, or over, the BCP layer. Thus, large membranes may be produced, thereby facilitating a large flow through the filter.

Alternatively, the method may comprise depositing, by lithography, a patterned mask for forming the starting points on the surface of the semiconductor substrate.

The patterned mask would act as mask for the forming of the indents.

According to one embodiment the block-copolymer may remain on the surface of the semiconductor substrate during the forming of the pores.

In other words, as the indents act as starting points of the pores the block-copolymer may remain on the surface of the semiconductor substrate during the forming the pores, at locations of the starting points, through the semiconductor substrate using electrochemical etching.

An advantage of this is that it may help to focus the electric current for the electrochemical etching selectively to the indents, such that the pores are formed only from the idents. This is true thanks to the electrical isolation property of the block-copolymer.

According to one embodiment the method may further comprise:
applying illumination light to the substrate, wherein the light is applied to a side opposite to the surface of the substrate comprising the starting points, wherein the light is applied simultaneously as the forming of the pores.

An advantage of this is that the light may accelerate the electrochemical etching through the semiconductor substrate.

Electron-hole pairs can arise from absorption of photons that exceed the semiconductor bandgap. For instance, silicon has a bandgap of 1.11 eV, which means only photons with a wavelength ≤ 1.13 µm can induce electron-hole pairs needed in the electrochemical etching.

The wavelength of the applied light may be dynamically varied. As the light of different wavelengths penetrates differently through the semiconductor substrate, the thickness of the semiconductor substrate may decide the wavelength used.

For instance, light of 532 nm wavelength has a penetration depth of 1 µm in silicon, whereas light of 1064 nm wavelength has a much larger penetration depth of 1000 µm. At the start of the ECE process, a relatively long wavelength, such as near-infrared, e.g. 1064nm, may be applied. During the deepening of the pits, progressively shorter wavelengths may be applied, down to the blue or even near-ultraviolet, e.g. 365 nm. In this way, the electron/hole pairs induced by photon absorption are preferably formed just under the indents. This considerably favors vertical etching compared to lateral etching.

According to one embodiment the illumination light wavelength may be gradually tuned to shorter wavelengths during the formation of the pores.

The wavelength may be tuned in such a way that the electro-hole pairs may be formed mainly just below the bottoms of progressively deepening pits in the substrate, where the pits will eventually reach through the entire substrate to form the pores.

Thus, at the start of the formation of the pores one wavelength can be used for the backside illumination. While the electrochemical etching proceeds and pits extend deeper into the semiconductor substrate, the illumination wavelength is accordingly and gradually tuned to shorter wavelength. This keeps the generation of holes just below the bottoms of the pits. This helps to avoid that the holes would contribute to etching of the side walls, while they still can optimally diffuse to the tip of the shape of the pit extending into the substrate and thereby increase vertical etching speed.

The tunable wavelength may be achieved in various ways: E.g. by using a broadband light source with a dynamically continuously tunable bandpass filter, by a tunable "white light laser" or by using an array of LEDs or lasers with different wavelengths located in sufficiently small wavelength steps to sufficiently approach the desired effect.

Moreover, once sufficient pore depth has been achieved, the wavelength (and/or voltage bias) may be tuned in such a way that pore width would deliberately and gradually be enlarged. Thus, gradually increasing the porosity of the pores towards an outlet of the pores. Thus, at the side not starting with the starting points, the pore width may be enlarged. This may lower the hydrodynamic resistance of the membrane and thus increasing the desired exchange across the membrane, while simultaneously avoiding that pores get clogged by stuck filtrate particles. This may be advantageous for some applications of use.

According to one embodiment the forming of the pores, at the locations of the starting points, may form pores of highly monodisperse diameter through the substrate.

Thus, the diameter of the pores are uniform both through the thickness of the substrate and between a plurality of pores.

According to one embodiment the forming of the pores through the semiconductor substrate using electrochemical etching, may be made at a voltage of 1 to 50 V.

The voltage may be provided to apply a current over the electrolyte. Under the electrical current, the electrolyte removes particles from the semiconductor substrate, providing a pore.

According to one embodiment the pore may have a diameter of 30 nm or less.

This pore width may be especially suitable for filtering of blood.

The pore diameter may be smaller than 30 nm, such that 6-8 nm. The diameter of the pores may be shrinked by the use of a coating of at least the side walls of the pores. The coating may further be used to adapt other properties of the side walls of the pores, such as an electric surface charge.

In a preferred embodiment the diameter-determining coating may also provide blood compatibility in the sense of preventing the deposition of proteins, preventing the activation of blood coagulation and preventing the growth of biofilms.

According to one embodiment the forming of indents may provide the indents with a rounded or pointy bottom.

In other words, the indents are deeper in the middle of the indent than near the vertical walls of the indents. Thus, the indents may have a U-shape or a V-shape.

During the start of the forming 101 of indents 201, the parameters may be such that the bottom of the indents is kept flat. However, during the dry etching the etching parameters may deliberately be changed such that the indent bottom may become u-shaped or v-shaped. An advantage of this is that it may help to concentrate the surface charge region which in turn attracts the holes such that the electrochemical etching reaction preferably "drills" vertically and not sideward.

According to one embodiment the semiconductor substrate may comprise silicon.

According to one embodiment the substrate may comprise silicon with a crystal structure of <100>.

This is advantageous since the crystal structure of the <100> silicon promotes the vertical electrochemical etching.

According to one embodiment the substrate may comprise n-doped or p-doped silicon.

An advantage of this is that the effectiveness of the electrochemical etching may be further improved by doping of the semiconductor substrate.

According to one embodiment the substrate may comprise silicon doped with phosphorous.

This may have the ability to stimulate the formation of vertical pore structures.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 illustrates a semiconductor substrate during steps of a method for forming pores in the substrate.
Fig. 2 illustrates a semiconductor substrate during steps of a method for forming pores in the substrate.
Fig. 3 is a flow-chart over a method.

### Detailed description

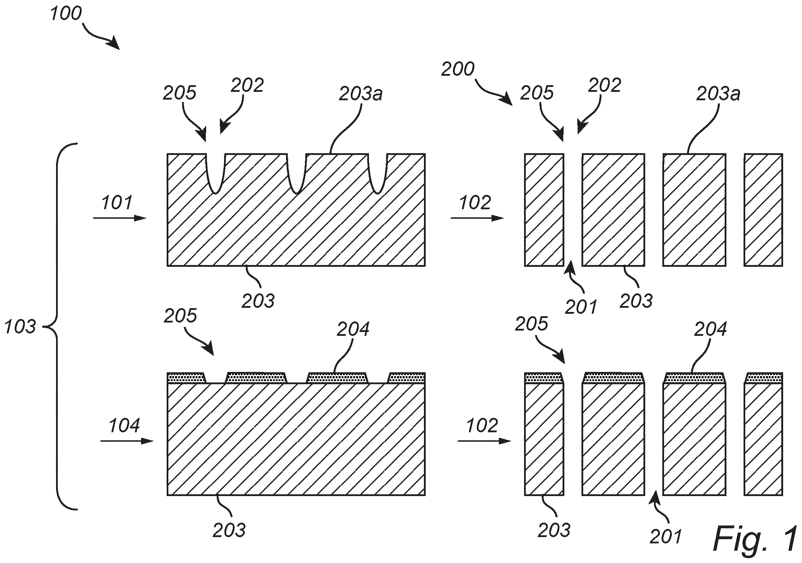

Fig. 1 illustrates a method 100 for manufacturing a membrane 200 with through-going pores 201.

The method 100 comprises controlling 103 starting points 205 for the through-going pores 201. The controlling 103 may be made by forming 101 indents 202 on a surface 203a of a semiconductor substrate 203 using a dry-etch process. The controlling 103 may on the other hand be made by applying 104 a mask 204 on the surface 203a of the semiconductor substrate 203. The mask 204 comprises openings 202a.

During the dry etching for forming 101 the indents 202, ions are used to penetrate the substrate 203 and form the indents 202. The dry etching may be made using deep reactive ion etching.

The forming 101 of indents 201 may provide the indents with a rounded or pointy bottom. During the start of the forming 101 of indents 201, the parameters may be such that the bottom of the indents is kept flat. However, during the dry etching the etching parameters may deliberately be changed such that the indent bottom may become u-shaped or v-shaped.

The dry etching may be performed to a depth of 30-110 nm.

The dry etching may be performed in a very regular pattern. The size and the position of the indents 202 may be controlled such that the position of the pores 201 are evenly distributed.

The dry etching may be controlled by the use of a mask. Thus, the positioning of the indents may be controlled by the use of a mask, having openings at the regular pattern of the indents. The mask may comprise a block copolymer.

The semiconductor substrate 203 may comprise silicon. The substrate 203 may comprise n-doped or p-doped silicon. The substrate 203 may comprise silicon doped with phosphorous.

During the controlling 103 of starting points 205 for the through-going pores 201, by applying 104 a mask 204 on the surface 203a of the semiconductor substrate 203, the mask 204 is applied 104 to the surface 203a of the semiconductor substrate 203. In the mask 204, openings 202a in the mask 204 may be formed by etching. Several different etching methods may be used, such as dry etching and wet etching.

The position of the openings 202a may be controlled such that the position of the pores 201 are evenly distributed.

The method 100 further comprises forming 102 the pores 201, at locations of the starting points 205, through the semiconductor substrate 203 using electrochemical etching. The electrochemical etching through the semiconductor substrate 203 selectively starts at the starting points 205.

For instance, if the semiconductor substrate 203 comprises silicon, the substrate 203 may be connected to an anode and immersed into an electrolyte. The electrolyte may comprise hydrofluoric acid and ethanol. The electrolyte may further comprise dimethylformamide and acetonitrile. A voltage is applied over the electrolyte. The voltage may be 1 to 50 V.

During the applied voltage, silicon reacts with the hydrogen and fluoride such that silicon ions are dissolved, and the pores 201 are formed in the substrate 203. During this process holes, sometimes called electron-holes, are created.

Forming 102 pores 201, at the locations of the starting points 205, forms pores of highly monodisperse diameter through the substrate 203.

The pore 201 may have a diameter of 30 nm or less.

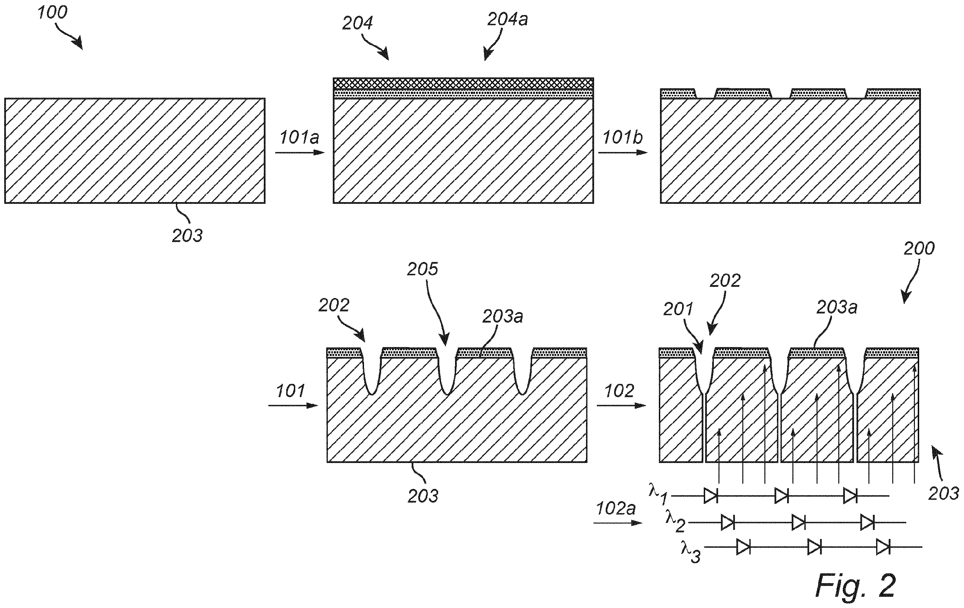

Fig. 2 illustrates a method 100 for manufacturing a membrane 200 with through-going pores 201. Fig. 2 comprises many similarities with Fig. 1 and for reasons of simplicity only the differences between Fig. 1 and Fig. 2 will be discussed below.

The controlling 103 of starting points 205 may comprise:
depositing 101a a coating of a block-copolymer 204a on the surface 203a of the semiconductor substrate 203.

The block-copolymer 204a is deposited 101a on the surface 203a of the semiconductor substrate 203. Through molecular self-assembly, the block-copolymer 204a forms a very regular pattern across the surface of the semiconductor substrate 203.

The block copolymer 204a is a layer that comprises block copolymers (BCPs). The block copolymer 204a may comprise polystyrene-polymethylmethacrylate (polystyrene-PMMA) block copolymers, and/or polylactic acid-polyvinylpyridine block copolymers, and/or polyethylene oxide-polydimethylsiloxane block copolymers.

The method 100 may further comprise removing 101b one of the block-copolymers, wherein the remaining block-copolymer act as a mask for forming the indents 202 or act as starting points 205 for forming the pores 201.

In Fig. 2, the starting points 205 are illustrated as indents 202. However, it should be understood that the principle of using the BCP 204a as a mask 204 may also be made by starting the electrochemical etching immediately from the opening 204a of the mask 204.

Dry etching may be used to remove one of the block-copolymers 204a. Specifically, the dry-etch may etch one copolymer much faster than the other copolymer(s). This allows for creation of a very regular distributed spatial pattern of indents into the semiconductor substrate having a very high pore density.

The block-copolymer 204a may remain on the surface 203a of the semiconductor substrate 203 during the forming 101 of the pores 201.

This masking technology allows one to create a very regular distributed spatial pattern of indents 202 into the semiconductor substrate 203 having a very high pore density.

For instance, the method 100 may manufacture a membrane 200 having 110nm deep through-going pores 201 of 20nm diameter.

As illustrated in Fig 2. the method 100 may further comprise applying 102a illumination light to the substrate 203. It should be understood that this may be made also in the method according to Fig. 1. The light is applied to a side 203b opposite to the surface 203a of the substrate 203 comprising the starting points 205. The light is applied simultaneously as the forming 102 of the pores 201.

The wavelength of the light may be different. As the light of different wavelengths penetrates differently through the semiconductor substrate, the thickness of the semiconductor substrate may decide the wavelength used.

For instance, light of 532 nm wavelength has a penetration depth of 1 µm in silicon, whereas light of 1064 nm wavelength has a much larger penetration depth of 1000 µm.

The illumination light wavelength may be gradually tuned to shorter wavelengths during the formation 102 of the pores 201.

The tunable wavelength may be achieved in various ways: E.g. by using a broadband light source with a dynamically continuously tunable bandpass filter, by a tunable "white light laser" or by using an array of LEDs or lasers with different wavelengths located in sufficiently small wavelength steps to sufficiently approach the desired effect.

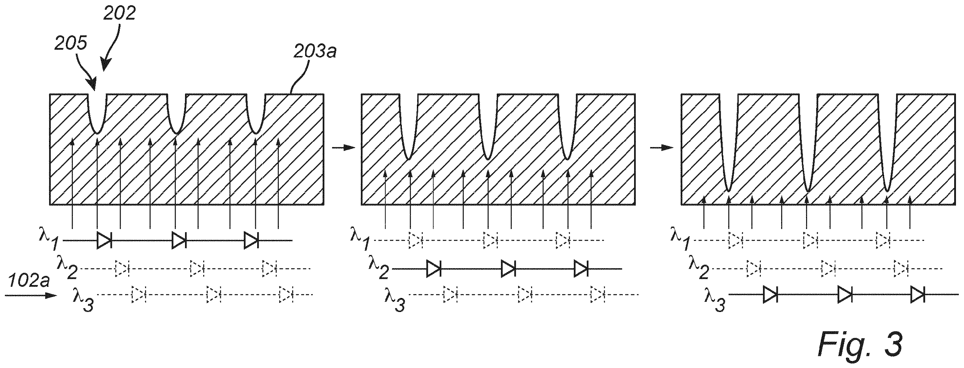

Illustrated in Fig. 3 is an example of the use of a tunable wavelength during the deepening of the pits. The wavelength may progressively getting longer along the time course of the electrochemical wet etching process. In the figure, the length of the arrows from the lightning source indicates wavelength and light penetration depth to where the majority of electron/hole pairs are formed for driving the ECE process. This maximizes the vertical etching direction, while minimizing widening of the pores. Dotted light sources indicates light sources not used. As exemplified, three wavelengths, λ₁, λ₂ and λ₃ are used. However, it should be understood that than three wavelengths may be applied.

As an example, at the start of the ECE process, a relatively long wavelength, such as near-infrared, e.g. 1064 nm, may be applied. During the deepening of the pits, progressively shorter wavelengths may be applied, down to the blue or even near-ultraviolet, e.g. 365 nm. In this way, the electron/hole pairs induced by photon absorption are preferably formed just under the indents. This considerably favors vertical etching compared to lateral etching.

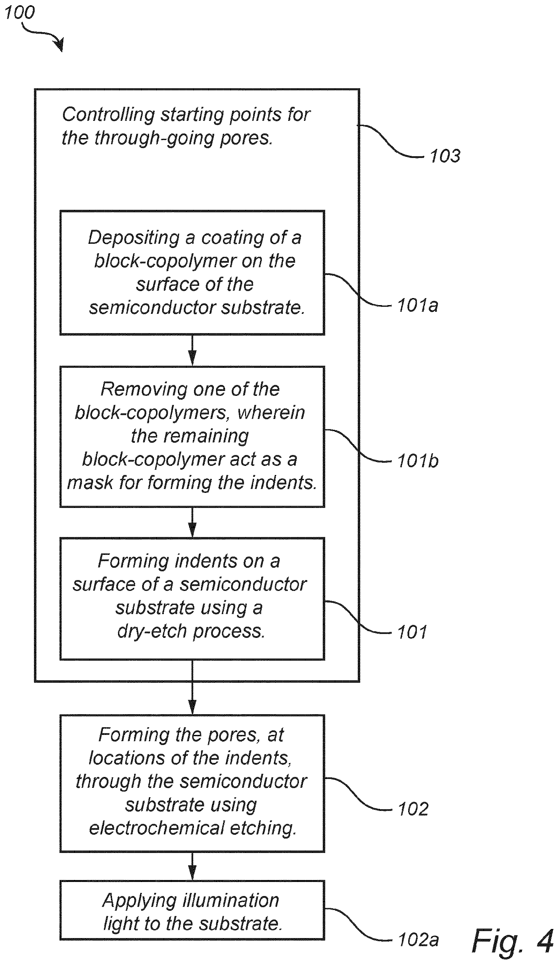

Fig. 4 illustrates a method 100 for manufacturing a membrane 200 with through-going pores 201.

The method 100 comprises controlling 103 starting points 205 for the through-going pores 201. The controlling 103 may be made by forming 101 indents 202 on a surface 203a of a semiconductor substrate 203 using a dry-etch process or by applying 104 a mask 204 on the surface 203a of the semiconductor substrate 203 comprising openings 202a in the mask.

The method 100 further comprises forming 102 the pores 201, at locations of the starting points 205, through the semiconductor substrate 203 using electrochemical etching, wherein the electrochemical etching through the semiconductor substrate 203 selectively starts at the starting points 205. The method 100 may further comprise, before the controlling 103 of staring points 205, depositing 101a a coating of a block-copolymer 204a on the surface 203a of the semiconductor substrate 203.

Further, the method 100 may comprise removing 101b one of the block-copolymers, wherein the remaining block-copolymer 204a act as a mask 204 for forming 101 the indents 202 or act directly as starting points 205 for forming the pores 201.

During the removing 101b one of the block-copolymers, the dry-etch process may be tuned so that a thick enough mask 204 may be left in place, to allow profiting from its' electric isolation to focus the electric current for etching onto the staring points 205.

The block-copolymer 204a may remain on the surface 203a of the semiconductor substrate 203 during the forming 102 of the pores 201.

The method 100 may further comprise applying 102a illumination light to the substrate 203. The light may be applied to a side 203b opposite to the surface 203a of the substrate 203 comprising the starting points 205. The light is applied simultaneously as the forming 102 of the pores 201.'

The illumination light wavelength may gradually be tuned to shorter wavelengths during the formation 102 of the pores 201.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method (100) for manufacturing a membrane (200) with through-going pores (201), the method (100) comprising:
controlling (103) starting points (205) for the through-going pores (201) by forming (101) indents (202) on a surface (203a) of a semiconductor substrate (203) using a dry-etch process or by applying (104) a mask (204) on the surface (203a) of the semiconductor substrate (203) comprising openings (202a) in the mask;
forming (102) the pores (201), at locations of the starting points (205), through the semiconductor substrate (203) using electrochemical etching, wherein the electrochemical etching through the semiconductor substrate (203) selectively starts at the starting points (205).

2. A method (100) according to claim 1, wherein the controlling (103) of starting points (205) comprises:
depositing (101a) a coating of a block-copolymer (204a) on the surface (203a) of the semiconductor substrate (203)
removing (101b) one of the block-copolymers, wherein the remaining block-copolymer (204a) act as a mask (204) for forming (101) the indents (202) or act as starting points (205) for forming the pores (201).

3. A method (100) according to claim 2, wherein the block-copolymer (204a) remains on the surface (203a) of the semiconductor substrate (203) during the forming (101) of the pores (201).

4. A method (100) according to any one of claims 1 to 3, wherein the method (100) further comprises:
applying (102a) illumination light to the substrate (203), wherein the light is applied to a side (203b) opposite to the surface (203a) of the substrate (203) comprising the starting points (205), wherein the light is applied simultaneously as the forming (102) of the pores (201).

5. A method (100) according to claim 4, wherein the illumination light wavelength is gradually tuned to shorter wavelengths during the formation (102) of the pores (201).

6. A method (100) according to according to any one of claims 1 to 5, wherein the forming (102) of the pores (201), at the locations of the starting points (205), forms pores of highly monodisperse diameter through the substrate (203).

7. A method (100) according to any one of claims 1 to 6, wherein the forming (102) of the pores through the semiconductor substrate (203) using electrochemical etching, is made at a voltage of 1 to 50 V.

8. A method (100) according to any one of claims 1 to 7, wherein the pore (201) has a diameter of 30 nm or less.

9. A method (100) according to any one of claims 1 to 8, wherein the forming (101) of indents (201) provides the indents (202) with a rounded or pointy bottom.

10. A method (100) according to any one of claims 1 to 9, wherein the semiconductor substrate (203) comprises silicon.

11. A method (100) according to any one of claims 1 to 10, wherein the substrate (203) comprises silicon with a crystal structure of <100>.

12. A method (100) according to any one of claims 1 to 11, wherein the substrate (203) comprises n-doped or p-doped silicon.

13. A method (100) according to any one of claims 1 to 12, wherein the substrate (203) comprises silicon doped with phosphorous.
